# FASCICULE DE BREVET EUROPEEN

(11) **EP 0 349 434 B1**
(45) Date de publication et mention de la délivrance du brevet: **18.11.1993**
(21) Numéro de dépôt: 89401868.8
(22) Date de dépôt: 29.06.1989
(51) Int. Cl.: F16G 5/20

(54) **Courroie striée de transmission de puissance**
Rillentreibriemen
Grooved power transmission belt

(30) Priorité: 30.06.1988 FR 8808807
(43) Date de publication de la demande: 03.01.1990
(73) Titulaire: HUTCHINSON, F-75008 Paris (FR)
(72) Inventeur: Georget, Pierre, F-37170 Chambray les Tours (FR)
(74) Mandataire: Ramey, Daniel

(56) Documents cités:
- EP-A- 0 034 225
- EP-A- 0 122 869
- EP-A- 0 249 404
- GB-A- 839 801
- US-A- 2 274 515
- US-A- 4 647 278

## Description

L'invention concerne des courroies de transmission de puissance, du type à surface interne "striée", c'est-à-dire comprenant des stries ou nervures circonférentielles.

Ces courroies ont des formes géométriques précises qui satisfont à des normes, par exemple la norme DIN 7867 ou le projet de norme ISO R 15-506. Elles sont utilisables notamment dans l'automobile et dans l'électroménager (entraînement d'un tambour de machine à laver ou de sèche-linge par exemple) et peuvent comporter des stries à sommet tronqué, qui ont en section transversale une forme trapézoïdale.

On connait, par le document EP-A-0034 225, une courroie comportant des stries conférentielles à sommet tronqué, qui ont en section transversale une forme trapézoïdale dont la petite base est une surface incurvée concave. Dans cette courroie connue, les stries s'étendent à travers une armature longitudinale interne de câblés formée au voisinage de la surface externe de la courroie, de sorte que cette armature est interrompue entre les stries et que le courroie se comporte, non comme une courroie monobloc, mais comme plusieurs courroies trapézoïdales reliées entre elles par des bandes minces d'élastomère sans rigidité particulière.

Dans une phase intermédiaire de la fabrication d'une telle courroie, il est possible que les bases concaves des stries soient raccordées aux flancs des stries par des surfaces incurvées convexes, en fonction du type de moule utilisé pour la cuisson de la courroie.

Toutefois, les flancs des stries sont soumis ensuite à un usinage final qui fait plus ou moins disparaître ces surfaces convexes de raccordement de sorte que, dans la forme finale de la courroie, les bases concaves des stries sont raccordées aux flancs des stries par des angles vifs.

On a constaté qu'une courroie à stries circonférentielles sur sa surface interne présente souvent, après une certaine durée de service, des craquelures au niveau des arêtes de liaison entre les petites bases et les flancs des stries à section trapézoïdale. Ces craquelures sont dues à des concentrations de contraintes sur les arêtes, par contact des flancs et des arêtes des stries avec les surfaces correspondantes des poulies sur lesquelles passe la courroie, et elles ont pour conséquence la détérioration ou la destruction rapide de la courroie.

La présente invention a notamment pour but d'éviter cet inconvénient des courroies connues et, corollairement, de prolonger leur durée de vie.

Elle propose, à cet effet, une courroie striée de transmission de puissance, comprenant une armature longitudinale interne de câblés au voisinage de sa surface externe et des stries ou nervures circonférentielles à sommet tronqué formées dans sa surface interne, chaque strie ayant en section transversale une forme sensiblement trapézoïdale dont la petite base est une surface incurvée concave, caractérisée en ce que la courroie est monobloc, les stries étant formées à distance de l'armature longitudinale interne de câblés dans une direction prependiculaire à la surface externe de la courroie et en ce que, pour réduire les concentrations de contraintes dans les zones de raccordement entre les petite bases et les flancs des stries, les surface incurvées concaves des petites bases sont raccordées aux flancs des stries par des surfaces incurvées convexes dont les sections transversales sont des arcs de cercle.

Ce remplacement des arêtes de liaison entre les flancs et les petites bases des stries des courroies de la technique antérieure, par des surfaces incurvées convexes, a pour effet de réduire, dans une large mesure, les concentrations de contraintes dans ces zones. Il en résulte, corollairement, une augmentation de la durée de vie des courroies, qui peut atteindre 50 %.

De plus, la forme concave des petites bases des stries a pour effet de modifier la répartition des pressions sur les flancs des stries, lors de leur contact avec les poulies, dans un sens favorable à la diminution des contraintes sur ces flancs.

Selon une autre caractéristique de l'invention, les surfaces incurvées convexes ont, en section transversale, un rayon de courbure compris entre 0,2 et 2 millimètres, en fonction des dimensions des stries, et par exemple égal à 0,4 millimètres quand la hauteur des stries est d'environ 2 millimètres.

Le rayon de courbure, dans une section transversale, de la surface concave peut varier entre 0,5 et 100 millimètres, en fonction de la taille de la courroie.

De préférence, cette surface concave est raccordée directement aux surfaces convexes de liaison avec les flancs des stries.

L'invention sera mieux comprise et d'autres détails, caractéristiques et avantages de celle-ci apparaîtront plus clairement à la lecture de la description qui suit, faite à titre d'exemple en référence aux dessins annexés, dans lesquels :
- la figure 1 est une vue en coupe et en perspective d'une courroie striée de la technique antérieure ;
- la figure 2 est une demi-vue en coupe d'une strie d'une courroie selon l'invention.

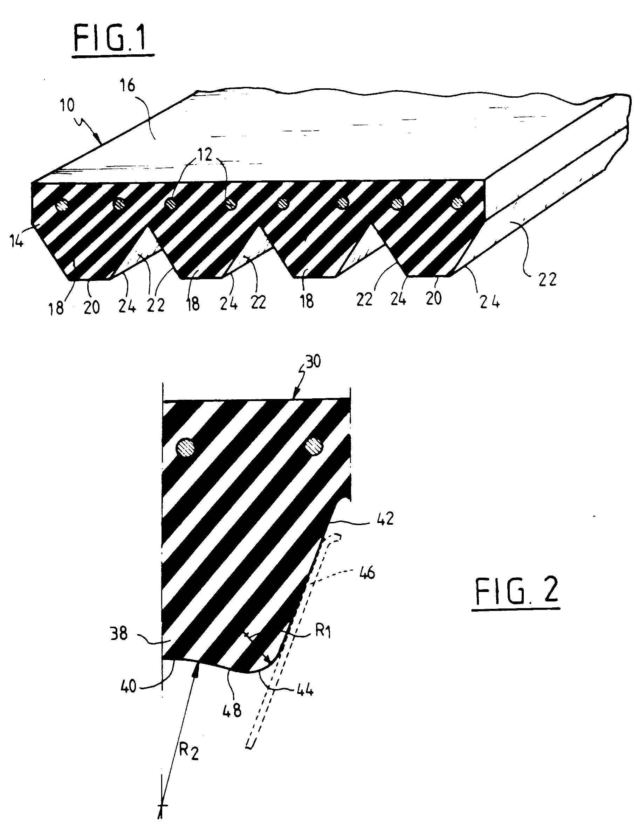

On a représenté, à titre d'exemple, en figure 1, une courroie striée selon la technique antérieure, désignée généralement par la référence 10 et comprenant une armature longitudinale interne de câblés 12 noyés dans une matière élastomère 14 telle qu'un caoutchouc ou un mélange de caoutchoucs, du type utilisé habituellement pour la fabrication des courroies de transmission de puissance.

La face externe 16 de la courroie 10 est sensiblement plate ou lisse, tandis que sa face interne est conformée avec des stries ou nervures circonférentielles 18 à sommet tronqué, qui ont donc en section transversale une forme sensiblement trapézoïdale, comprenant une petite base 20 reliée à deux flancs obliques 22 par des arêtes 24.

Lorsque la courroie 10 est en service et qu'elle passe sur une poulie, les flancs 22 des stries 20 sont appliqués sur des surfaces correspondantes de gorges parallèles de la poulie, et il se développe au niveau des arêtes 24 une concentration de contraintes qui entraîne la formation de craquelures et de fissures conduisant à la destruction de la courroie.

L'invention permet d'éviter ces inconvénients, en donnant à chaque strie la forme particulière représentée, à plus grande échelle, en figure 2.

Dans cette figure, qui est une demi-vue en coupe d'une strie d'une courroie 30 selon l'invention, du même type que la courroie 10 de la figure 1, la petite base 40 de chaque strie 38 est reliée aux flancs 42 de la strie par une surface incurvée convexe 44 qui est par exemple une portion de tore à section circulaire, de sorte que cette surface 44 est représentée, sur la demi-vue en coupe de la figure 2, par un arc de cercle.

En fonction des dimensions de la courroie 30 et de celles des stries 38, le rayon de courbure R1 de cette surface convexe 44 peut varier de 0,2 à 2 millimètres, en étant par exemple de 0,4 millimètre lorsque la hauteur de la strie est d'environ 2 millimètres.

Ces surfaces incurvées convexes 44, qui remplacent les arêtes vives 24 des courroies 10 de la technique antérieure, ont pour effet que les contraintes, au contact sur une gorge 46 de poulie représentée schématiquement en figure 2, sont reportées sur le flanc 42 et sont moins concentrées sur la surface 44. On évite ainsi les amorces de craquelures ou de fissures qui apparaissaient au niveau des arêtes 24, dans la technique antérieure, après une certaine durée de service de la courroie.

On peut indiquer, à titre d'exemple, que les contraintes dans la zone incurvée convexe 44 sont divisées par un facteur égal à environ 2, toutes autres choses étant par ailleurs égales.

Pour réduire encore les concentrations de contraintes dans cette zone, l'invention prévoit que la petite base de chaque strie 38 est formée par une surface incurvée concave 40 dont le rayon de courbure R2, en section transversale, peut varier entre 0,5 et 100 millimètres en fonction des dimensions de la courroie et des stries 38. Ce rayon de courbure R2 est par exemple de 2 millimètres lorsque la hauteur d'une strie 38 est de 2 millimètres environ.

La surface incurvée 40 formant la petite base de chaque strie est raccordée directement aux surfaces incurvées 44 de liaison avec les flancs 42, de telle sorte que le profil de chaque strie 38 est incurvé de façon continue, en présentant un point d'inflexion 48 entre chaque surface convexe 44 et la surface concave 40.

Comme les surfaces convexes 44, la surface concave 40 peut être formée par une portion de tore à section circulaire et être alors représentée, en figure 2, par un arc de cercle.

La présence de cette surface incurvée concave 40 à la base de chaque strie 38 a pour effet de modifier la répartition de la pression sur les flancs 42 des stries, au passage sur les poulies, dans un sens tendant à réduire les contraintes dans les zones incurvées convexes 44.

De façon générale, l'invention permet d'augmenter la durée de service des courroies de transmission de ce type, d'une valeur qui peut atteindre 50 %, et cela grâce à une simple modification de la forme d'une partie des stries. De plus, cette forme selon l'invention est favorable à une réduction du bruit provoqué par le passage de la courroie sur les poulies, grâce à la présence des canaux latéraux d'évacuation d'air, formés à la base des stries par les surfaces incurvées précitées.

## Revendications

1. Courroie striée de transmission de puissance monobloc, comprenant une armature longitudinale interne de câblés (12) au voisinage de sa surface externe et des stries ou nervures circonférentielles (38) à sommet tronqué formées dans sa surface interne, chaque strie ayant en section transversale une forme sensiblement trapézoïdale dont la petite base (40) est une surface incurvée concave,
les stries étant formées à distance de l'armature longitudinale interne de câblés (12) dans une direction perpendiculaire à la surface externe de la courroie et, pour réduire les concentrations de contraintes dans les zones de raccordement entre les petites bases (40) et les flancs (42) des stries, les surfaces incurvées concaves des petites bases (40) sont raccordées aux flancs (42) des stries par des surfaces incurvées convexes (44) dont les sections transversales sont des arcs de cercle

2. Courroie selon la revendication 1, caractérisée en ce que les surfaces concaves des petites bases (40) des stries sont raccordées par des points d'inflexion (48) aux surfaces convexes (44) de liaison aux flancs des stries.

3. Courroie selon l'une des revendications précédentes, caractérisée en ce que les surfaces convexes (44) ont, en section transversale, un rayon de courbure R1 compris entre 0,2 et 2 millimètres et par exemple égal à 0,4 millimètre quand la hauteur des stries est d'environ 2 millimètres.

4. Courroie selon l'une des revendications précédentes, caractérisée en ce que les surfaces concaves des petites bases (40) des stries sont, en section transversale, formées chacune par un arc de cercle.

5. Courroie selon la revendication 4, caractérisée en ce que les surfaces incurvées concaves des petites bases (40) des stries ont, en section transversale, un rayon de courbure R2 compris entre 0,5 et 100 millimètres, par exemple égal à 2 millimètres quand la hauteur d'une strie est de 2 millimètres environ.

## Claims

1. A one-piece ribbed belt for transmitting power, the belt having internal longitudinal reinforcement of cables (12) in the vicinity of its outside surface and circumferential ribs (38) with truncated tops on its inside surface, the cross-section of each rib being substantially trapezium-shaped with a small base (40) constituted a concave curved surface, the ribs being formed at a distance from the internal longitudinal reinforcement of cables (12) in a direction perpendicular to the outside surface of the belt and to reduce stress concentrations in the connection zones between the small bases (40) and the sides (42) of the ribs, the concave curved surfaces of the small bases are connected to the sides (42) of the ribs via convex curved surfaces (44) whose cross-sections are circular arcs.

2. A belt According to claim 1, characterized in that the concave surfaces of the small bases (40) of the ribs are connected via points of inflection (48) to the convex surfaces (44) linking them to the sides of the ribs.

3. A belt according to any preceding claim, characterized in that the convex surfaces (44) have a radius of curvature R1 in cross-section that lies in the range 0.2 millimeters (mm) to 2 mm, and that is equal to 0.4 mm, for example, when the height of the ribs is about 2 mm.

4. A belt according to any preceding claim, characterized in that the concave surfaces of the small bases (40) of the stripes are formed in cross-section by respective circular arc.

5. A belt according to claim 4, characterized in that the concave curved surfaces of the small bases (40) of the ribs have a cross-section with a radius of curvature R2 lying in the range 0.5 millimeters (mm) and 100 mm, e.g. equal to 2 mm when the height of a rib is about 2 mm.

## Patentansprüche

1. Einstückiger Rillenantriebsriemen, der in der Nähe seiner äußeren Oberfläche eine innere Längsverstärkung aus Seilen (12) und am Umfang seiner inneren Oberfläche ausgebildete Rillen oder Rippen (38) mit abgestutzten Spitzen aufweist, wobei jede Rippe im Querschnitt im wesentlichen eine trapezförmige Form besitzt, deren kurze Basis (40) eine konkav gekrümmte Fläche ist, die Rippen in Abstand von der inneren Längsverstärkung aus Seilen (12) normal zur Außenfläche des Riemens ausgebildet sind und die konkav gekrümmten Flächen der kleinen Basen (40) zum Verringern der Spannungen in den Verbindungsbereichen zwischen den kleinen Basen (40) und den Seitenflächen (42) der Rippen über konvex gekrümmte Flächen (44), deren Querschnitte Kreisbögen sind, mit den Seiterflächen (42) der Rippen verbunden sind.

2. Riemen nach Anspruch 1, **dadurch gekennzeichnet**, **daß** die konkaven Flächen der kleinen Basen (40) der Rippen über Wendepunkte (48) mit den konvexen Flächen (44) zur Verbindung mit den Seitenflächen der Rippen verbunden sind.

3. Riemen nach einem der vorigen Ansprüche, **dadurch gekennzeichnet**, **daß** die konvexen Flächen (44) im Querschnitt einen Kurvenradius R1 zwischen 0,2 und 2 mm besitzen, der beispielsweise 0,4 mm beträgt, wenn die Höhe der Rippen ungefähr 2 mm ist.

4. Riemen nach einem der vorigen Ansprüche, **dadurch gekennzeichnet, daß** jede konkave Fläche der kleinen Basen (40) der Rippen im Querschnitt durch einen Kreisbogen gebildet ist.

5. Riemen nach Anspruch 4, **dadurch gekennzeichnet, daß** die konkav gekrümmten Flächen der kleinen Basen (40) der Rippen im Querschnitt einen Kurvenradius R2 zwischen 0,5 und 100 mm besitzen, der beispielsweise 2 mm beträgt, wenn die Höhe einer Rippe ungefähr 2 mm ist.
